# EUROPEAN PATENT APPLICATION

(11) **EP 3 024 126 A1**
(43) Date of publication of application: **25.05.2016**
(21) Application number: 14194088.2
(22) Date of filing: 20.11.2014
(51) Int. Cl.: H02K 9/08, H02K 7/18

(54) **Cooling arrangement**

(71) Applicant: Siemens Aktiengesellschaft, 80333 München (DE)
(72) Inventor: Airoldi, Giovanni, 7330 Brande (DK)

(57) **Abstract**

The invention describes a cooling arrangement (1) realised to cool stator windings (30) of a stator (3) enclosed in a generator housing (40), which cooling arrangement (1) comprises a fan arrangement (11) for directing a gaseous cooling medium (AF) towards a winding overhang (300) of the stator windings (30); and a volume reducer (10A, 10B) arranged to reduce a spatial volume (200R, 200F) between the winding overhang (300) and an inner corner (400) of the generator housing (40, 41, 42). The invention also describes a direct-drive wind turbine (2); a method of cooling stator windings (30) of a stator (3) enclosed in a generator housing (40, 41, 42); and a method of retrofitting a wind turbine (5).

## Description

The invention describes a cooling arrangement for cooling the stator windings of a stator; a direct-drive wind turbine; a method of cooling stator windings; and a method of retrofitting a wind turbine.

In a wind turbine generator, some way of cooling the hot coils or windings of the armature (usually the stator) is necessary, since the electrical resistance of the windings is proportional to their temperature, and the power output of the generator decreases as the resistance increases. Furthermore, an air-gap between stator and rotor is generally very small, so that heat from the windings may also be transferred to the magnets. Excessively high temperatures in the magnets can cause these to deteriorate over time. Therefore, it is necessary to ensure that the winding temperature is kept at a low level.

A winding or coil generally comprises a "loop" of a low-resistivity metal, with two halves extending along the length of the stator, and with each winding half arranged between parallel stator teeth. At each end of the stator, a winding undergoes a 180° turn. A wind turbine generator is generally realised as a three-phase machine, i.e. the windings are arranged in interleaved groups of three. Since each winding must undergo the 180° turn at each end of the stator, the ends of the windings for three phases must be interleaved, and the interleaved winding ends extend beyond the outer ends of the stator in a "winding overhang". To ensure minimum losses and balanced phases, the winding overhang is generally realised in as compact a manner as possible.

In one approach to cooling such a generator, a gaseous coolant such as air can be blown into the air-gap, where it absorbs heat from the windings. The warmed air can then be expelled from the generator. Alternatively, the air can pass from the air-gap through channels in the stator body and into the stator interior. The warmed air can be cooled using heat exchangers or any other appropriate cooling technique before being blown once again into the air-gap.

A problem with the known cooling arrangements is that the gaseous coolant will always follow the easiest path, and this leads to an insufficient cooling of the winding overhang. The reason for this is that the winding overhang extends into a cavity between the generator and a generator housing. The interleaved winding ends extend to some distance beyond the ends of the stator, and the 180° turn of the outermost windings effectively present a barrier or deterrent to any gaseous cooling medium. For various reasons, the cavity between the outer end of the winding overhang and the generator housing is necessary, for example on account of design tolerances, etc., or a longer generator housing may be designed to later accommodate a longer stator, but initially houses a shorter stator, so that the cavity is relatively large initially. In the cavity, the gaseous coolant will tend to simply flow around the winding overhang on its way to the air-gap, effectively bypassing by the compact winding overhang. As a result, the temperature in the winding overhang can be significantly hotter than the temperature of the winding halves between the stator teeth. As indicated above, the power output of the generator is limited by the hottest temperature in the windings. Furthermore, the conductivity of the winding ends decreases as their temperature increases, consequently increasing the heat-related losses of the generator.

It is therefore an object of the invention to provide a way of ensuring that the winding overhang is cooled in a more efficient manner.

This object is achieved by the cooling arrangement of claim 1; by the direct-drive wind turbine of claim 11; by the method of claim 12 of cooling stator windings; and by the method of claim 14 of retrofitting a wind turbine.

According to the invention, the cooling arrangement - realised to cool stator windings of a stator enclosed in a generator housing - comprises a fan arrangement for directing a gaseous cooling medium towards a winding overhang of the stator windings; and a volume reducer arranged to reduce a spatial volume between the winding overhang and an inner edge or corner of the generator housing.

In the context of the invention, the "inner edge" or "corner" of the generator housing may be understood to be the conjunction of an essentially cylindrical housing portion and an abutting housing end piece, for example a brake disc at the non-drive end of the generator. The inner edge formed by this conjunction may be essentially annular or ring-shaped, and can form a "corner" in a radial cross-section through the generator housing. An advantage of the cooling arrangement according to the invention is that the volume reducer compels the gaseous medium to pass through the winding overhang. While some gaseous coolant might still flow around the winding overhang, the reduced spatial volume between the winding overhang and the generator housing means that the passage through the winding overhang is now the easier option for the gaseous coolant.

According to the invention, the direct-drive wind turbine comprises an outer rotor and an inner stator, wherein the outer rotor is arranged on a rotatable generator housing. The direct-drive wind turbine also comprises a cooling arrangement according to the invention, realised to cool stator windings of the stator.

An advantage of the direct-drive wind turbine according to the invention is that the winding overhang can be cooled more efficiently, so that the temperature in the winding overhang as well as the temperature in the parallel winding arrangement will be kept to a favourable level. The temperature difference between the winding overhang and the parallel winding arrangement can be minimized, indicating that the cooling is being performed to a high degree of efficiency.

According to the invention, the method of cooling stator windings of a stator enclosed in a generator housing comprises the steps of reducing a spatial volume between the winding overhang and an inner corner or "inner edge" of the generator housing; and directing a gaseous cooling medium towards the winding overhang.

An advantage of the method according to the invention of cooling stator windings is that, with very little additional effort, the efficiency of a gaseous stator cooling arrangement can be increased significantly. Not only are the winding halves (arranged between parallel stator teeth on the stator) cooled to a desired temperature, the compact and barrier-like winding overhang is also cooled.

According to the invention, the method of retrofitting a wind turbine (which has a stator enclosed in a generator housing and a gaseous cooling arrangement for cooling stator windings of the stator) - comprises the step of arranging a volume reducer between a winding overhang of the stator windings and a corner of the generator housing

An advantage of the method according to the invention of retrofitting a wind turbine is that the cooling efficiency of an already present cooling arrangement can be significantly increased as regards cooling of the winding overhang since the volume reducer compels the gaseous cooling medium to pass through the winding overhang.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the wind turbine is a direct-drive wind turbine with an outer rotor and an inner stator. In such a design, the magnet poles are arranged on the inside of the outer rotor, and the outer rotor itself effectively acts as the generator housing. The wind turbine comprises a number of rotor blades mounted to a hub, and the hub is connected to the rotor so that the hub and rotor rotate as one. A canopy is mounted at the non-drive end of the generator to enclose machinery such as the yaw drive, control devices and other components. A labyrinth seal between rotor and canopy allows the rotor to rotate while ensuring that moisture and airborne particles do not enter the generator. Under certain conditions, the wind turbine rotor must be halted. Therefore, the generator housing generally comprises a brake disc at the non-drive end. A circular inner edge is formed at the junction of a cylindrical rotor housing and an essentially circular flat brake disc. To accommodate the stator and other generator components, the rotor housing is dimensioned to be longer than the stator, i.e. the rotor housing extends beyond the outer ends of the stator and its windings. This results in the cavity or gap, as described above, between the winding overhang and the rotor housing/brake disc at the non-drive end of the generator. A similar cavity or gap arises at the drive-end of the generator. These cavities may have different shapes, since the hub/rotor transition is generally structurally different from the rotor/canopy transition. In the context of the invention, it may be assumed that the volume reducer reduces such a cavity between the winding overhang and an inner corner of the generator housing.

In the following, it may also be assumed that the wind turbine comprises a gaseous cooling arrangement for directing a gaseous coolant at least from the non-drive end of the generator into the air-gap between stator and rotor. Without restricting the invention in any way, it may be assumed that the gaseous cooling medium comprises air. As mentioned above, the warmed air can be expelled in some appropriate manner after passing through the air-gap, or can be drawn into the stator interior, from which it can be expelled, or in which it can be cooled and then guided once more into the air-gap.

The volume reducer can be realised in any suitable manner. For example, it may be suspended from a supporting framework mounted to an available surface. However, in a preferred embodiment of the invention, the volume reducer is arranged along an interior surface of the generator housing.

The volume reducer preferably comprises an annular body dimensioned according to an annular inner edge of the generator housing, for example as defined by the cylindrical rotor housing and an essentially vertical brake-disc or back plate. Of course, the volume reducer need not be an uninterrupted annular body, but can comprise two or more pieces that together describe an annular shape.

The material of the volume reducer can be chosen on the basis of one or more desired material properties. For example, the volume reducer is preferably light, so that it does not significantly add to the weight of the rotor. In a particularly preferred embodiment of the invention, the volume reducer comprises a foam ring. This can be made of any kind of foam with a high density and only very small pores, if any. Such a foam ring can be formed by arranging one or more strips of foam (cut from a block) along the inner corner of the cavity region. The foam material can be glued in place, attached using double-sided adhesive strips, or in any other suitable manner. Alternatively, the foam ring can be made by spraying polyurethane foam directly into place, for example along the inner edge formed by the rotor housing and the brake-disc. After it has hardened, the ring of polyurethane foam acts to reduce the spatial volume of the cavity.

Alternatively or in addition, the volume reducer comprises a rigid annular body. This can be a pre-formed ring, or a number of pre-formed ring segments, that can be mounted into place. Such a rigid body can, for example, be formed from polyurethane rigid foam or any other suitable material.

As described above, the winding overhang extends some distance into a cavity at each end of the generator. The volume of the cavity at either end of the generator, the distance between the winding overhang and the rotor housing, and the distance between the winding overhang and the brake-disc or rotor/hub interface will depend to a large extent on the generator design. Therefore, in a particularly preferred embodiment of the invention, the shape of a radial cross-section of the volume reducer is based on the position of the winding overhang relative to its position in the cavity (a "radial cross-section" is to be understood as a cross-section obtained by a plane that contains the axis of rotation of the generator). For example, a volume reducer at the non-drive end may have a curved radial cross-section so that it transforms an otherwise 90° inner edge or inner corner into a rounded edge.

A stator for a direct-drive generator has a large interior volume. The stator is usually closed off at both drive end and non-drive end, for structural reasons, and also to allow a cooling arrangement to be positioned inside the stator interior. Usually, one or more crawl spaces are also provided in the stator interior so that a technician can move through the generator and into the hub for a maintenance or repair procedure. Access to a crawl space is provided by a suitable large opening in a stator backplate/frontplate. The presence of these openings means that any fans or blowers - used to direct a cooling airflow into the air-gap - cannot always be arranged symmetrically about the stator frontplate/backplate.

As a result, some regions of the winding overhang receive less cooling airflow than others, and "hot spots" may develop in the less-cooled regions. In a preferred embodiment of the invention, therefore, the volume reducer is shaped according to a temperature differential between a first winding overhang region and a second winding overhang region. The first winding overhang region may comprise the portions of the winding overhang that are near the any fans or blowers, while the second winding overhang region comprises the remaining portions of the winding overhang that are remote from the fans or blowers and are therefore not cooled enough. To lower the temperature differential, the volume reducer might comprise grooves or fins arranged to encourage a portion of the cooling airflow to flow towards the hot spot regions.

The cooling airflow absorbs heat from the winding overhang, and then passes through the air-gap where it absorbs more heat from the windings on the stator body. In a preferred embodiment of the invention, the cooling arrangement comprises a suction apparatus realised to draw the air between the windings, through channels in the stator body, and then into an interior cavity of the stator. In a further preferred embodiment of the invention, the cooling arrangement comprises a heat exchanger arranged in the interior cavity of the stator, which heat exchanger is realised to cool the air drawn into the interior cavity of the stator. Preferably, the fan arrangement is realised to draw air out of the interior cavity of the stator, and to re-direct the cooled air into a cavity between the generator housing and a rotor/brake-disc interface. A similar fan arrangement at the drive end can draw cooled air out of the interior cavity of the stator and re-direct it into a cavity between the generator housing and a rotor/hub interface. With a volume reducer in place, the cooling airflow is compelled to pass through the drive-end winding overhang, so that this region of stator windings is more efficiently cooled.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a direct-drive wind turbine with a first embodiment of a cooling arrangement according to the invention;
Fig. 2 shows an enlarged view of a region in the non-drive end of the wind turbine of Fig. 1;
Fig. 3 shows a detail of a second embodiment of a cooling arrangement according to the invention;
Fig. 4 is a view onto the stator backplate of a wind turbine according the invention;
Fig. 5 shows a cooling arrangement of a prior art wind turbine.

In the diagrams, like numbers refer to like objects throughout. Objects in the diagrams are not necessarily drawn to scale.

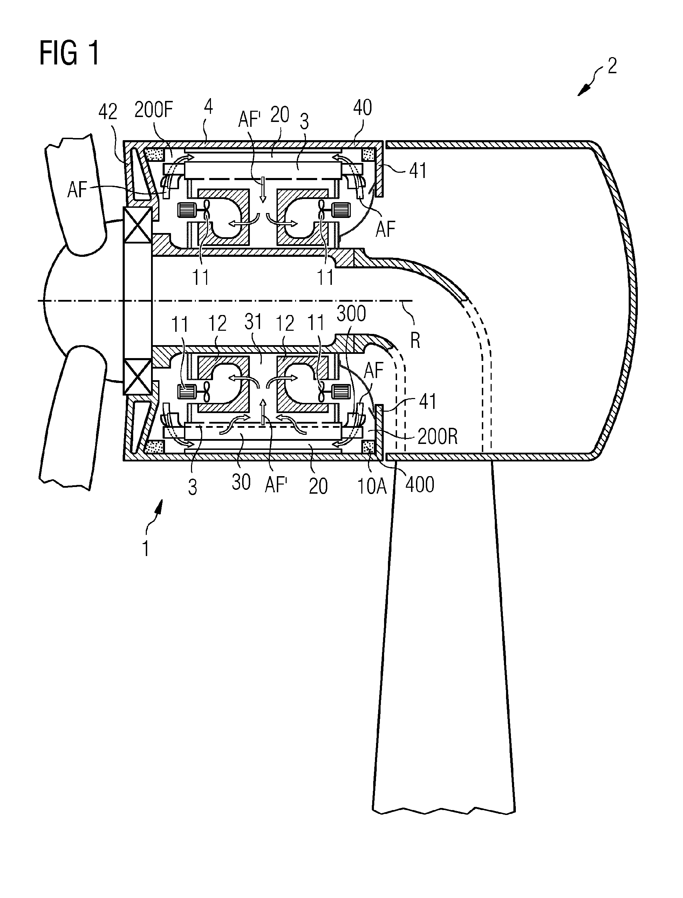

Fig. 1 is a very simplified diagram of an embodiment of a direct-drive wind turbine 2 according to the invention. Windings 30 on the inner stator 3 are cooled by guiding a cooling airflow AF into an air-gap 20 between rotor 4 and stator 3, and then drawing the airflow AF through the stator windings 30 and into an interior cavity 31 of the stator 3. In this embodiment, the warmed air AF' drawn into the interior cavity 31 is cooled by a number of heat exchangers 12 and then sucked out of the interior cavity 31 by a number of fans 11 which direct the cooled airflow AF back towards a winding overhang 300 extending beyond the end of the stator 3.

The diagram shows that a winding overhang 300 extends to some distance into a cavity 200R between rotor housing 40 and brake-disc 41 at the non-drive end of the generator, and into a cavity 200F between rotor housing 40 and a front-face at the drive end. At the non-drive end, the cavity 200R is bounded by the cylindrical rotor housing body and a brake disc 41, which abut to give an annular "inner edge" 400. In a radial cross-section by a plane containing the axis of rotation R of the generator, the inner edge 400 appears as an essentially right-angled "inner corner" 400.

To ensure that the cooling airflow AF does not simply flow around the barrier-like winding overhang 300, the cooling arrangement 1 according to the invention uses a volume reducer 10A comprising a foam ring 10A arranged along the inner edge 400 at the junction between rotor housing 40 and brake-disc 41. The foam ring 10A reduces the spatial volume in the cavity 200R and effectively presents a larger barrier to the cooling airflow AF, which is then compelled to find a way through the winding overhang 300. In this embodiment, the foam ring 10A simply has a rectangular cross-section and can be cut from a block of high-density foam before securing it along the inner edge 400 of the generator. Of course, a similar arrangement can be used at the drive-end of the generator.

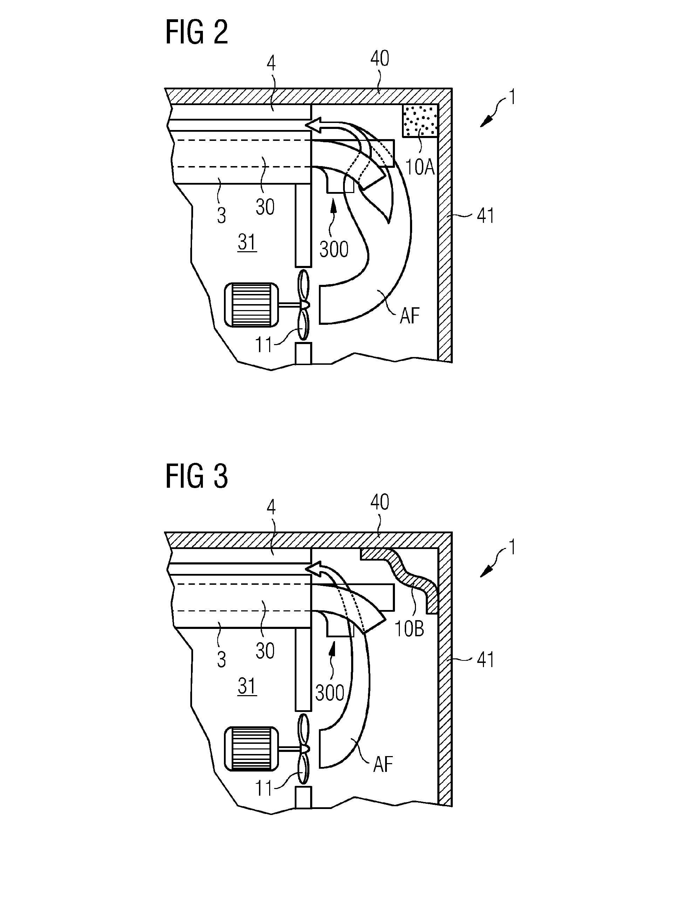

Fig. 2 shows an enlarged view of a portion of a winding arrangement 30 on the stator 3 of the wind turbine 2 of Fig. 1. The diagram shows the parallel arrangement of windings 30 and illustrates the complex interleaved shape of the winding overhang 300. The diagram also shows how the presence of the volume reducer 10A acts to compel the cooling airflow AF through narrow gaps 301 in the winding overhang 300.

Fig. 3 shows a second embodiment of a direct-drive wind turbine 2 according to the invention. Here, the volume reducer 10B has another kind of radial cross-section shaped to encourage the cooling airflow AF to pass through the winding overhang 300. In this embodiment, the volume reducer 10B comprises an annular body with a shape that replaces the inner right angle 400 by a curved transition between rotor housing 40 and brake-disc 41. Here also, a similar arrangement can be used at the drive-end of the generator. The type of volume reducer to use at drive end and non-drive end may be chosen according to the inner edge shapes at the junctions between rotor housing/brake-disc and rotor housing/hub interface.

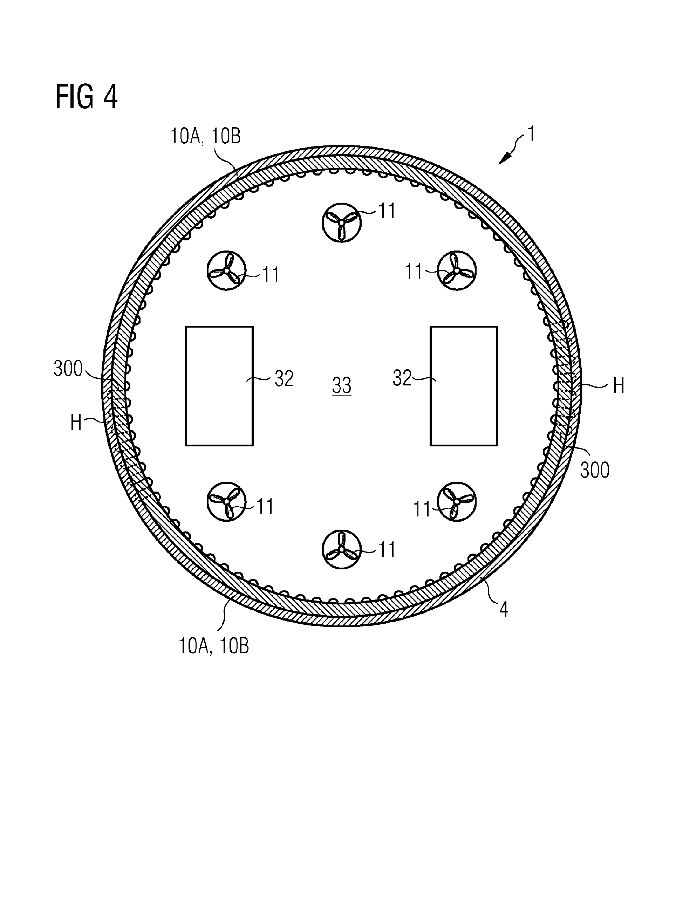

Fig. 4 is a view onto the stator backplate 33 of a wind turbine according the invention, as seen from an interior of the canopy. For the sake of clarity, the brake-disc is not shown, but may be visualized as an annular plate extending inwards from the outer circumference of the rotor 4. The diagram shows instead a volume reducer 10A, 10B extending around the circumference of the rotor 4. The winding overhang 300 is mostly concealed behind the volume reducer 10A, 10B in this diagram, and the concealed parts are only indicated in part by the dotted line. The diagram shows an arrangement of fans 11 and a number of access openings 32 to crawl spaces through the stator 3. The access openings 32 result in an asymmetrical placement of a number of fans 11, so that hot spots H develop in the "remote" winding overhang portions. In this embodiment, the volume reducer 10A, 10B can be shaped to encourage a portion of the cooling airflow AF to move towards the hot spots H, so that these can be more efficiently cooled. Of course, a similar arrangement may be used at the drive end, since access openings at the stator frontplate also might otherwise lead to undesirable hotspots in winding overhang regions.

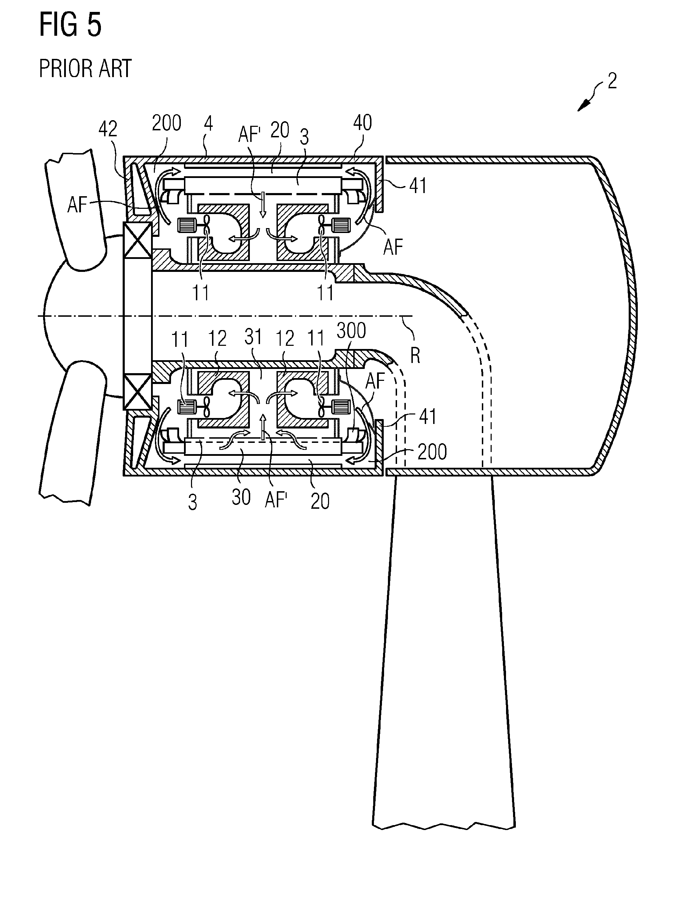

Fig. 5 shows an enlarged view of a region in the non-drive end of a prior art wind turbine 5. The diagram shows that the winding overhang 300 extends into a cavity 200R between rotor housing 40 and brake-disc 41, and into a cavity 200F between rotor housing 40 and hub interface 42. A cooling airflow AF is directed at the winding overhangs 300, but bypasses these to a large extent since it will tend to take the easier path around the winding overhang 300 on its way to the air-gap 20.

The result is that the winding overhang 300 is not cooled sufficiently, and a significant temperature difference can develop between the winding overhang 300 and the more optimally cooled parallel winding arrangement between the stator teeth. This temperature difference shows that the winding overhang 300 is not cooled as well as the remainder of the windings. The hottest temperature of a conductor determines the current it will carry, so that the prior art cooling arrangements may be described as inefficient regarding this aspect.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A cooling arrangement (1) realised to cool stator windings (30) of a stator (3) enclosed in a generator housing (40), which cooling arrangement (1) comprises
- a fan arrangement (11) for directing a gaseous cooling medium (AF) towards a winding overhang (300) of the stator windings (30); and
- a volume reducer (10A, 10B) arranged to reduce a spatial volume (200R, 200F) between the winding overhang (300) and an inner corner (400) of the generator housing (40, 41, 42).

2. A cooling arrangement according to claim 1, wherein the volume reducer (10A, 10B) is arranged along an interior surface (41) of the generator housing (40, 41, 42).

3. A cooling arrangement according to claim 1 or claim 2, wherein the volume reducer (10A, 10B) comprises an annular body (10A, 10B) dimensioned according to an annular inner edge (400) of the generator housing (40, 41, 42).

4. A cooling arrangement according to any of the preceding claims, wherein the volume reducer (10A) comprises a foam ring (10A).

5. A cooling arrangement according to any of the preceding claims, wherein the volume reducer (10B) comprises a rigid annular body (10B).

6. A cooling arrangement according to any of the preceding claims, wherein the shape of a radial cross-section of the volume reducer (10A, 10B) is based on the position of the winding overhang (300) relative to the generator housing (40, 41, 42).

7. A cooling arrangement according to any of the preceding claims, wherein the volume reducer (10A, 10B) is shaped according to a temperature differential between a first winding overhang region and a second winding overhang region.

8. A cooling arrangement according to any of the preceding claims, comprising a suction apparatus (11) realised to draw the gaseous cooling medium (AF) through the stator windings (30) and into an interior cavity (31) of the stator (3).

9. A cooling arrangement according to any of the preceding claims, comprising a heat exchanger (12) arranged in the interior cavity (31) of the stator (3), which heat exchanger (12) is realised to cool the gaseous cooling medium (AF') drawn into the interior cavity (31) of the stator (3).

10. A cooling arrangement according to claim 8, any of the preceding claims, wherein the fan arrangement (11) is realised to direct the gaseous cooling medium (AF) out of the interior cavity (31) of the stator (3) in the direction of the winding overhang (300).

11. A direct-drive wind turbine (2) comprising
- an outer rotor (4) and an inner stator (3), wherein the outer rotor (4) is arranged on a rotatable generator housing (40, 41, 42); and
- a cooling arrangement (1) according to any of claims 1 to 10, realised to cool stator windings (30) of the stator (3).

12. A method of cooling stator windings (30) of a stator (3) enclosed in a generator housing (40, 41, 42), which method comprises the steps of
- reducing a spatial volume (200R, 200F) between the winding overhang (300) and a corner (400) of the generator housing (40, 41, 42); and
- directing a gaseous cooling medium (AF) towards the winding overhang (300).

13. A method according to claim 12, comprising the steps of drawing the gaseous cooling medium (AF) through the stator windings (30) and into an interior cavity (31) of the stator (3) and/or cooling the gaseous cooling medium (AF') drawn into the interior cavity (31) of the stator (3) and/or directing the gaseous cooling medium (AF) out of the interior cavity (31) of the stator (3).

14. A method of retrofitting a wind turbine (5) that comprises
- a stator (3) enclosed in a generator housing (40, 41, 42);
- a gaseous cooling arrangement (11, 12, 13) for cooling stator windings (30) of the stator (3);
which method comprises arranging a volume reducer (10A, 10B) between a winding overhang (300) of the stator windings (30) and an inner corner (400) of the generator housing (40, 41, 42) to reduce a spatial volume (200R, 200F) between the winding overhang (300) and the inner corner (400) of the generator housing (40, 41, 42).
